# EUROPÄISCHE PATENTSCHRIFT

(11) **EP 4 571 264 B1**
(45) Veröffentlichungstag und Bekanntmachung des Hinweises auf die Patenterteilung: **04.11.2026**
(21) Anmeldenummer: 24218552.8
(22) Anmeldetag: 10.12.2024
(51) Int. Cl.: G01D 5/14, G01D 11/30

(54) **SENSORHALTERUNG UND SENSORANORDNUNG**
SENSOR HOLDER AND SENSOR ARRANGEMENT
SUPPORT DE CAPTEUR ET ENSEMBLE DE CAPTEURS

(30) Priorität: 14.12.2023 DE 102023135165
(43) Veröffentlichungstag der Anmeldung: 18.06.2025
(73) Patentinhaber: Zöller-Kipper GmbH, 55130 Mainz (DE)
(72) Erfinder: Barwig, Helmfried, 55270 Essenheim (DE); Siradchuk, Andrii, 64569 Nauheim (DE)
(74) Vertreter: Regler, Markus Egid

(56) Entgegenhaltungen:
- WO-A1-00/66462
- DE-A1- 102006 020 424
- DE-A1- 102012 220 139
- DE-U1- 202009 009 365
- US-A1- 2019 234 774
- US-A1- 2021 278 246
- US-B2- 8 425 177

## Beschreibung

Die Erfindung betrifft eine Sensorhalterung mit den Merkmalen des Oberbegriffs von Patentanspruch 1 sowie eine Sensoranordnung.

In vielen technischen Bereichen ist es notwendig, die Winkelposition von bewegten Bauteilen, beispielsweise Wellen, korrekt zu bestimmen. Häufig kommen dabei Sensoranordnungen zum Einsatz, bei denen ein Magnet auf dem bewegten Bauteil angeordnet ist und dessen Drehbewegung mitmacht. In der Nähe des Magneten wiederum ist ein Magnetfeldsensor angeordnet, der das sich mit der Drehung verändernde Magnetfeld detektiert, wodurch die Winkelposition des bewegten Bauteils bestimmt werden kann.

Aus der US 2019/234774 A1 ist eine Sensoranordnung für eine Schwenkarmanordnung bekannt.

Im Bereich der Abfallsammelfahrzeuge ist die Notwendigkeit der Bestimmung einer Winkelposition an vielen Stellen notwendig. Ein Abfallbehälter wird durch eine Hub-Kippvorrichtung angehoben und in eine Überkopfposition gedreht, um den darin enthaltenen Abfall in das Innere eines Sammelraums zu entleeren. Hier kann eine rotierende Welle zum Einsatz kommen, deren Winkelposition Rückschluss auf die aktuelle Position des Abfallbehälters zulässt. Auch eine Hubmechanik mit mehreren gelenkig miteinander verbundenen Hebeln wird mit einer entsprechenden Sensoranordnung versehen, da die Winkelposition der Drehverbindung Auskunft über die aktuelle Hubposition des Abfallbehälters zulässt.

Es ist notwendig, dass Magnet und Sensor sich in einem definierten Ortsverhältnis zueinander befinden, damit die jeweilige Winkelposition präzise detektierbar ist. Dazu müssen die Komponenten zuvor zueinander ausgerichtet werden. Es ist die Aufgabe der vorliegenden Erfindung, eine Sensorhalterung sowie eine Sensoranordnung vorzuschlagen, durch die die Positionierung und Justage von Magnet und Sensor verbessert wird.

Diese Aufgabe wird gelöst durch eine Sensorhalterung mit den Merkmalen des Patentanspruchs 1 sowie eine Sensoranordnung mit den Merkmalen des Patentanspruchs 10.

Weitere besondere Merkmale der Erfindung sind Gegenstand der jeweiligen abhängigen Ansprüche.

Die Erfindung betrifft eine Sensorhalterung mit einem Halteelement, das dazu eingerichtet ist, einen Magneten zu umschließen, einem an dem Halteelement angeordneten, mit diesem verbindbaren Tragelement, das dazu eingerichtet ist, einen zu dem Magneten gegenüberliegend, beabstandet angeordneten Magnetfeldsensor aufzunehmen, wobei das Tragelement reversibel und rotatorisch variabel an dem Halteelement befestigbar ist.

Das von dem Magneten erzeugte Magnetfeld wird von dem Sensor detektiert. In Abhängigkeit von der Magnetfeldfeldstärke wird ein elektrisches Signal erzeugt und an eine Steuerungseinrichtung weitergeleitet. Die Stärke des Magnetfelds und damit die Höhe des elektrischen Signals hängt dabei zum einen vom Abstand des Magneten zum Sensor ab, zum anderen von der rotatorischen Position des Magneten relativ zum Sensor. Dreht sich der Magnet, der üblicherweise auf einem sich drehenden Bauteil, etwa einer Welle oder Achse, angeordnet ist, so ändert sich das den Sensor durchsetzende Magnetfeld und aus der Änderung kann die Winkelposition des bewegten Bauteils bestimmt werden.

Das den Magneten umschließende Halteelement ist im zusammengebauten Zustand in einem festen Abstand zu dem Tragelement angeordnet, so dass bei selber rotatorischer Magnetposition stets das im Wesentlichen selbe elektrische Signal erzeugt wird. Dadurch ist eine wiederholsichere Bestimmung der Winkelposition möglich. Bei einer Wartung ist gewährleistet, dass der Sensor in stets gleichem Abstand gegenüber dem Magneten angeordnet wird.

Das Tragelement ist rotatorisch variabel an dem Halteelement befestigbar. Das bedeutet, dass der Sensor mit dem Halteelement um eine Rotationsachse drehbar ist, die vorzugsweise mit der Rotationsachse des bewegten Bauteils zusammenfällt oder parallel zu dieser liegt. Dadurch kann bei der Montage der Sensor rotatorisch variabel gegenüber dem Magneten positioniert werden, so dass auf einfache Weise ein möglichst optimales Sensorsignal justiert werden kann.

Durch das Umschließen des Magneten mit dem Halteelement wird dieser zudem vor Umwelteinflüssen wie Schmutz, Spritzwasser oder Staub geschützt, die die Detektion beeinflussen können. Es ist dabei klar, dass der Magnet beweglich innerhalb des Halteelements angeordnet ist, damit er die Rotation des bewegten Bauteils mitmachen kann. Zudem können noch Dichtungselemente vorgesehen sein, um den Innenraum des Halteelements, in dem sich der Magnet befindet, weiter vor Verschmutzung zu schützen.

Erfindungsgemäß ist vorgesehen, dass das Tragelement kreisbogenförmige Schraublöcher aufweist, die zum Befestigen des Tragelements an dem Halteelement von Schrauben durchgriffen sind. Das Tragelement ist an dem Halteelement schraubtechnisch festgelegt, wobei das Halteelement entsprechende Bohrungen zur Aufnahme der Schrauben aufweist. Durch die Kreisbogenform der Schraublöcher ist es möglich die rotatorische Position des Tragelements gegenüber dem Halteelement zu verändern, ohne dass die Schrauben vollständig gelöst werden müssen. Der Sensor kann somit viel schneller und variabler gegenüber dem Magneten justiert werden, die Montage wird dadurch erleichtert.

Für die Justage werden die Schrauben leicht gelöst, das Tragelement rotiert und die Schrauben wieder festgezogen. Nach Kontrolle des Sensorsignals kann dies gegebenenfalls wiederholt werden, bis ein optimales Sensorsignal erreicht ist. Bevorzugt sind drei kreisbogenförmige Schraublöcher vorgesehen, die auf einem gemeinsamen Kreisumfang liegen.

In einer weiteren Ausgestaltung der Erfindung weisen die Schraublöcher ein Bogenmaß entsprechend einem Winkel α,β,γ von 30° bis 80°, bevorzugt 50° bis 70°, besonders bevorzugt 55° bis 65°, auf. Das detektierte Magnetfeld ändert sich periodisch, wobei eine Periode einer vollen Umdrehung des Magneten und damit des bewegten Bauteils entspricht. Mit dieser Ausgestaltung der Erfindung ist es möglich, mit geringem Aufwand einen großen Bereich einer vollen Umdrehung und damit der Magnetfeldperiode abzudecken, wobei das Tragelement trotzdem stabil bleibt. Dadurch wird der Justageaufwand bei Montage und Wartung weiter reduziert. Produktionsbedingte Toleranzen der Bauteile können zudem kompensiert werden.

Insbesondere wenn drei Schraublöcher vorgesehen sind, ist es möglich, bei nur drei Anschraubvarianten einen großen Teil der Umdrehung oder sogar eine volle Umdrehung des Magneten abzudecken.

Eine weitere Ausführung der Erfindung sieht vor, dass das Halteelement einen Aufnahmeabschnitt aufweist, der den Magneten umschließt. Dieser Aufnahmeabschnitt ist dazu eingerichtet, den Magneten beweglich in sich aufzunehmen, so dass er einerseits vor Umwelteinflüssen geschützt ist und andererseits an einer definierten Position, insbesondere relativ zu dem Magnetfeldsensor, gehalten ist.

Vorzugsweise ist der Aufnahmeabschnitt aus zumindest zwei miteinander verbindbaren, den Magneten umschließenden Teilsegmenten gebildet. Dadurch kann der Aufnahmeabschnitt in einfacher Weise den Magneten umschließend angeordnet werden. Dabei können zusätzliche Elemente, beispielsweise Dichtungselemente, ebenfalls in dem Aufnahmeabschnitt angeordnet werden. Dabei können Hinterschnitte gebildet werden, um diese Elemente verliersicher in dem Aufnahmeabschnitt zu halten. Dies verbessert ebenfalls die Montagefreundlichkeit der Sensorhalterung und die Dauerhaltbarkeit der Sensoranordnung.

In einer weiteren vorteilhaften Ausführung der Erfindung weist das Halteelement einen Anbindungsabschnitt zum Befestigen der Sensorhalterung auf. Durch den separaten Anbindungsabschnitt ist die Befestigung der Sensorhalterung unabhängig von der Position des Haltelements in Einbaulage. Der Anbindungsabschnitt kann passend für den jeweiligen Einsatzzweck konzipiert werden.

Bevorzugt ist der Anbindungsabschnitt aus zumindest zwei miteinander verbindbaren, einen Klemmring bildenden Teilsegmenten gebildet. Diese Ausgestaltung ermöglicht eine einfache Befestigung der Sensoranordnung, wobei die Teilsegmente für den jeweiligen Einsatzzweck der Sensoranordnung konzipiert werden können.

In einer weiteren Ausgestaltung der Erfindung ist vorgesehen, dass der Anbindungsabschnitt und der Aufnahmeabschnitt durch einen Verbindungabschnitt miteinander verbunden sind, vorzugsweise einstückig und materialeinheitlich verbunden sind. Somit kann der Anbindungsabschnitt des Halteelements an einer passenden Position festgelegt werden und über den Verbindungsabschnitt mit dem Aufnahmeabschnitt verbunden sein, der selbst wiederum an der für ihn passenden Position angeordnet ist. Die Sensorhalterung kann damit auf den jeweiligen Einsatzzweck angepasst werden.

Durch eine einstückige und materialeinheitliche Verbindung sind Anbindungsabschnitt und der Aufnahmeabschnitt stabil und widerstandsfähig miteinander verbunden. Eine einstückige und materialeinheitliche Verbindung kann beispielsweise durch 3D-DruckVerfahren, spritztechnische Verfahren, gusstechnische Verfahren und dergleichen hergestellt werden. Der Verbindungsabschnitt kann auch Verstärkungselemente wie beispielsweise Stege aufweisen, um die Stabilität weiter zu erhöhen.

Besonders bevorzugt sind ein Teilsegment des Anbindungsabschnitts und ein Teilsegment des Aufnahmeabschnitts mit dem Verbindungsabschnitt verbunden, vorzugsweise einstückig und materialeinheitlich verbunden. Das verbessert zusätzlich die Montagefreundlichkeit.

Weiterhin bevorzugt sind der Anbindungsabschnitt und der Aufnahmeabschnitt beabstandet zueinander angeordnet. Damit kann die Sensorhalterung an einer passenden Stelle mit dem Anbindungsabschnitt festgelegt werden, während der Aufnahmeabschnitt an der Stelle angeordnet werden kann, wo sich der Magnet befindet.

Die Erfindung betrifft weiterhin eine Sensoranordnung mit einer Sensorhalterung wie vorstehend beschrieben sowie einem in dem Halteelement angeordneten Magneten und einem in dem Tragelement angeordneten Magnetfeldsensor. Bei einer solchen Sensoranordnung werden der Magnet und der Magnetfeldsensor fest in einer vorbestimmten Positionierung zueinander gehalten, so dass die Detektion des Magnetfeldes wiederholsicher erfolgen kann. Gleichzeitig kann vorteilhafterweise bei Montage und Wartung der Sensor rotatorisch in einfacher Weise variabel gegenüber dem Magneten ausgerichtet werden. Für weitere Vorteile und Einzelheiten der Sensoranordnung wird auf obige Ausführungen bezüglich der Sensorhalterung verwiesen.

Bevorzugt ist der Magnet an einer in das Halteelement hineinragenden oder diese durchgreifenden Welle angeordnet. Dabei wird der Magnet von dem Halteelement umschlossen, so dass er vor Verschmutzung und anderen Umwelteinflüssen geschützt ist. Gleichzeitig ist der Magnet um eine Rotationsachse beweglich innerhalb des Halteelements angeordnet. Das Halteelement ist demzufolge gegenüber der Welle so angeordnet, dass der Magnet sich innerhalb des Halteelementes befindet. Da sich das Halteelement und das Tragelement in einer festen räumlichen Beziehung zueinander befinden, gilt dies auch für die Welle und den Sensor und damit auch für den Magneten, so dass eine wiederholsichere Detektion des Magnetfelds gesichert ist.

Eine weitere Ausführung der Erfindung sieht vor, dass die Welle zumindest abschnittsweise in einem Rohr angeordnet ist und der Anbindungsabschnitt der Sensorhalterung an dem Rohr angeordnet ist. Die Sensorhalterung kann so in unmittelbarer Nähe zu der Welle angeordnet werden, wobei die Welle sich gleichzeitig ungehindert drehen kann. Dadurch wird ein sehr kompakter und damit bauraumsparender Zusammenbau erreicht. Zudem wird die Welle vor Verschmutzung und Spritzwasser weitgehend geschützt. Wenn die Sensorhalterung das mit dem Magneten versehene freie Ende der Welle vollständig umfasst, ist diese sogar vollständig eingekapselt. Damit wird ein störungsfreier Betrieb ermöglicht.

Bevorzugt umgreift der Anbindungsabschnitt das Rohr. Insbesondere ist der Anbindungsabschnitt aus zumindest zwei miteinander verbindbaren, einen Klemmring bildenden Teilsegmenten gebildet. Das ermöglicht eine einfache Montage und gleichzeitig einen stabilen Sitz der Sensorhalterung, so dass die Sensoranordnung eine wiederholsichere Detektion des Magnetfeldes ermöglicht.

Zudem betrifft die Erfindung ein Abfallsammelfahrzeug mit einer vorstehend beschriebenen Sensoranordnung. Einsatzmöglichkeiten an einem Abfallsammelfahrzeug sind eine Hub-Kipp- oder Kippvorrichtung, der Kompaktierungsmechanismus, ein klappbares Trittbrett und dergleichen. Der jeweilige Betriebszustand der Komponenten ist mit hoher Präzision bestimmbar, die Montage und Wartung werden vereinfacht.

Weitere Merkmale der Erfindung sind den Figuren und der zugehörigen Beschreibung zu entnehmen.

Es zeigen:
- Figur 1: eine erfindungsgemäße Sensorhalterung in perspektivischer Darstellung,
- Figur 2: eine erfindungsgemäße Sensorhalterung in Explosionsdarstellung,
- Figur 3: eine erfindungsgemäße Sensoranordnung an einer Kippvorrichtung,
- Figur 4: eine erfindungsgemäße Sensoranordnung in Seitenansicht,
- Figur 5: eine erfindungsgemäße Sensoranordnung in Draufsicht,
- Figur 6: eine Schnittdarstellung einer erfindungsgemäßen Sensoranordnung.

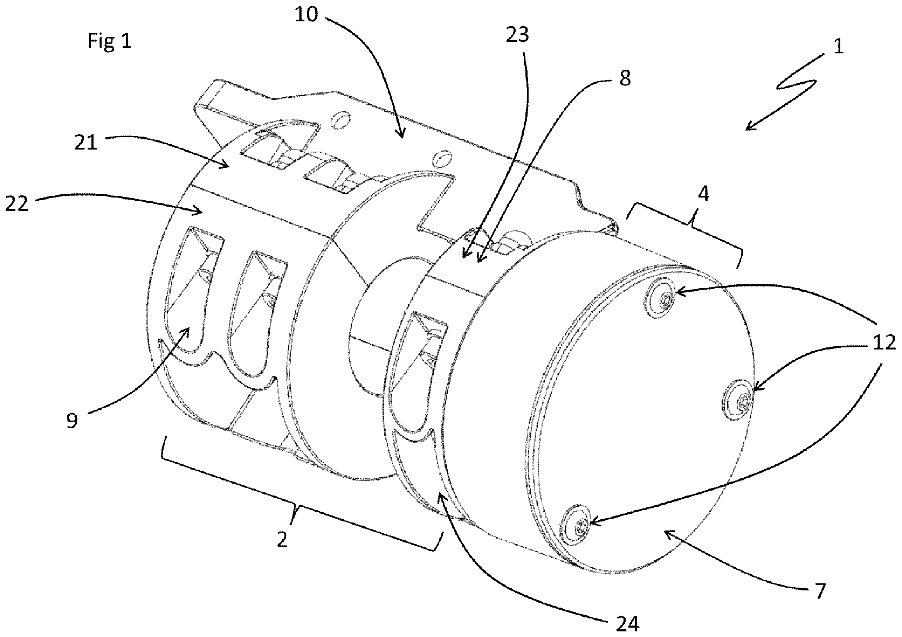

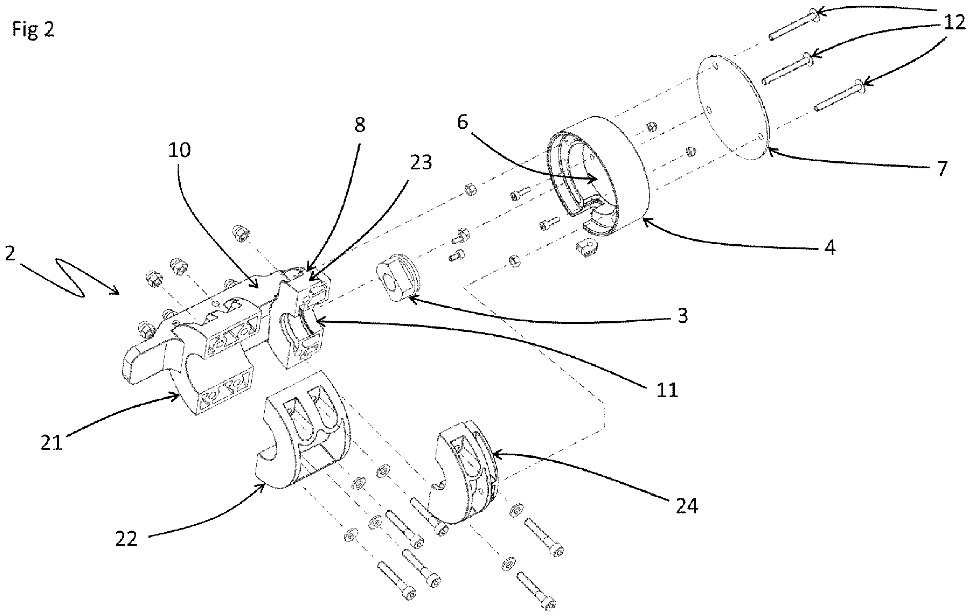

Figuren 1 und 2 zeigen eine Sensorhalterung 1 mit einem Halteelement 2 das dazu eingerichtet ist, einen Magneten 3 zu umschließen, einem an dem Halteelement 2 angeordneten, mit diesem verbindbaren Tragelement 4, das dazu eingerichtet ist, einen zu dem Magneten 3 gegenüberliegend, beabstandet angeordneten Magnetfeldsensor 5 aufzunehmen, wobei das Tragelement 4 reversibel und rotatorisch variabel an dem Halteelement 2 befestigbar ist.

Das Tragelement 4 weist in seinem Inneren eine Aufnahmeraum 6 auf in dem der Magnetfeldsensor 5 schraubtechnisch angeordnet ist. Der Aufnahmeraum 6 wird auf seiner dem Halteelement 2 gegenüberliegenden Seite mit einer Deckplatte 7 verschlossen, um den Magnetfeldsensor 5 gegenüber der Umwelt abzuschirmen.

Das Halteelement 2 umfasst einen Aufnahmeabschnitt 8, dem der Magnet 3 aufgenommen wird, einen Anbindungsabschnitt 9 sowie einen Verbindungsabschnitt 10, der den Aufnahmeabschnitt 8 mit dem Anbindungsabschnitt 9 verbindet.

Der Aufnahmeabschnitt 8 verfügt über einen Innenraum 11, in dem der Magnet 3 angeordnet ist.

Das Tragelement 4 ist mittels dreier Schrauben 12 mit dem Halteelement 2 beziehungsweise dem Aufnahmeabschnitt 8 verbindbar. Im zusammengebauten Zustand befindet sich der Magnetfeldsensor 5 in einem festgelegten Abstand gegenüber dem Magneten 3, so dass das von dem Magnetfeldsensor 5 detektierte Magnetfeld nicht durch einen unbeabsichtigt veränderlichen Abstand zum Magneten 3 variieren kann, was eine fehlerhafte Bestimmung der Winkelposition des Magneten 3 gegenüber dem Magnetfeldsensor 5 zur Folge hätte.

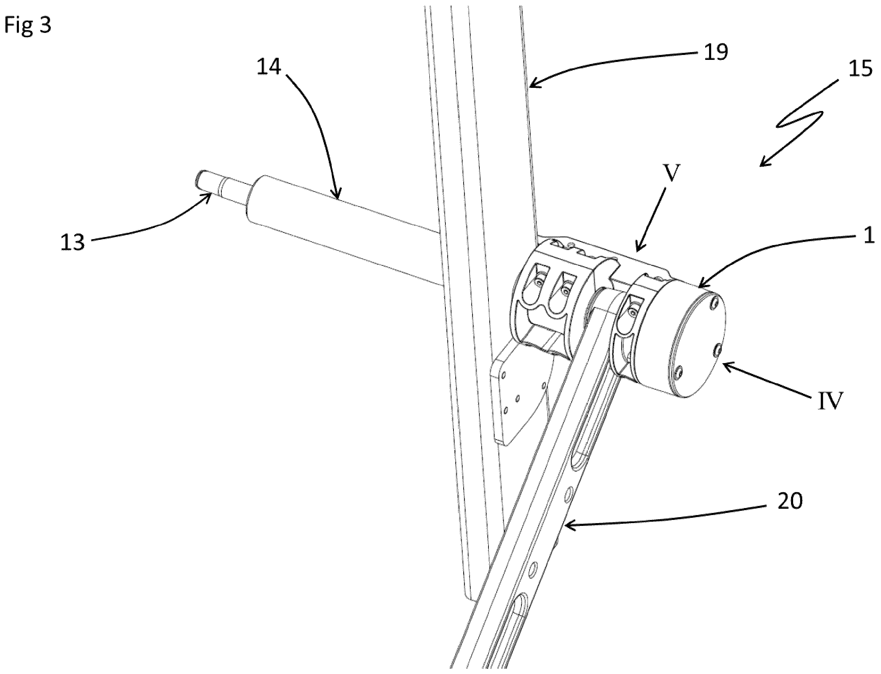

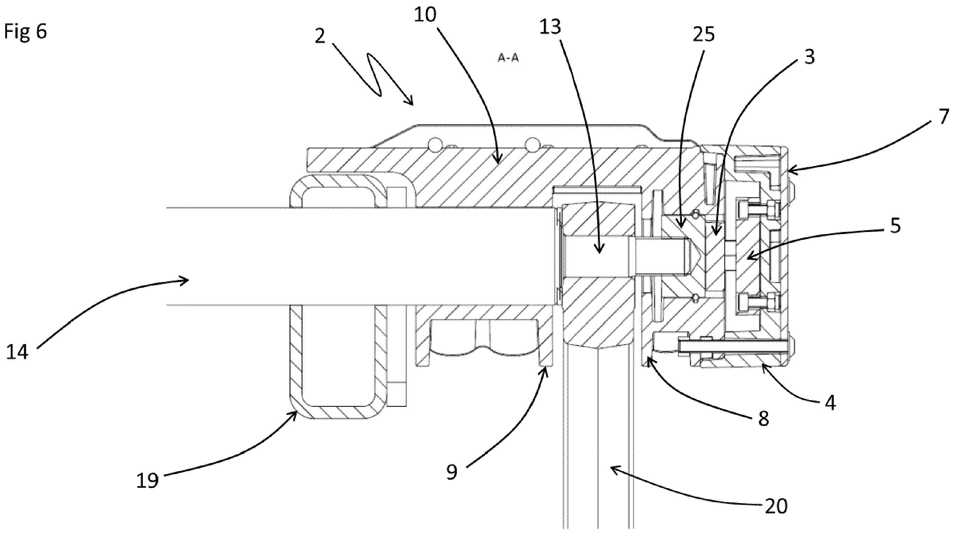

Damit das gewährleistet ist, ist der Anbindungsabschnitt 9 an einer Komponente festgelegt, die gegenüber dem beweglichen Teil unbeweglich ist. In dem in den Figuren 3 bis 6 dargestellten Ausführungsbeispiel handelt es sich bei dem beweglichen Teil um eine Welle 13 einer Kipp-Vorrichtung, die in einem unbeweglichen Rohr 14 geführt ist. Die Welle 13 ragt in den Innenraum 11 des Aufnahmeabschnitts 8 hinein. An dem freien Ende der Welle 13 ist der Magnet 3 fest auf einem Magnetträger 25 (siehe Figur 6) angeordnet, so dass er sich mit der Welle 13 dreht. Somit umfasst der Aufnahmeabschnitt 8 des Halteelements 2 zwar den Magneten 3, der sich aber dennoch rotatorisch frei bewegen kann. Der Innenraum 11 ist einerseits an der Welle 13 durch Dichtelemente und andererseits durch das Tragelement 4 von der Umgebung abgeschlossen. Dadurch ist der Magnet 3 vor Schmutz, Spritzwasser und Niederschlag geschützt, wodurch eine ordnungsgemäße Funktionsfähigkeit der Sensoranordnung 15 gewährleistet ist.

Der Magnet 3 ist gleichzeitig translatorisch fest in dem Innenraum 11 gehalten, so dass sich seine diesbezügliche Position gegenüber dem Magnetfeldsensor 5 nicht ändert.

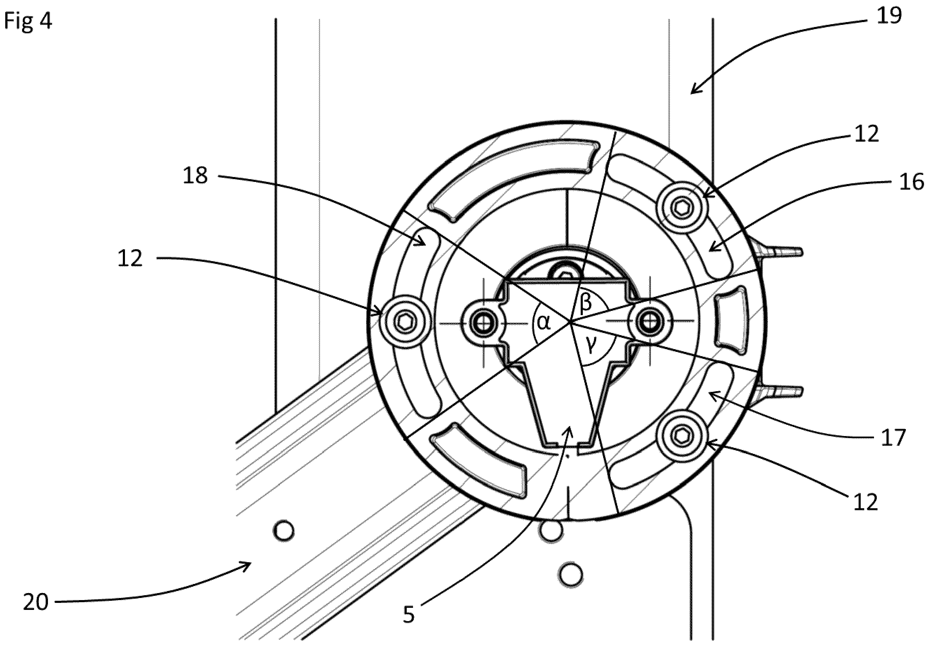

Das Tragelement 4 ist rotatorisch variabel an dem Halteelement 2 befestigbar. Das bedeutet, dass das Tragelement 4 um eine Achse, die der Drehachse der Welle 13 entspricht, gegenüber dem Halteelement 3 verdreht werden kann. Damit wird auch der Magnetfeldsensor 5 gegenüber dem Magneten 3 verdreht, wodurch diese beiden Komponenten zueinander justiert werden können, um ein optimales Detektionssignal zu erhalten. Um die Justage bei Montage und Wartung möglichst einfach zu gestalten, weist das Tragelement 4 drei kreisbogenförmige Schraublöcher 16,17,18 auf die auf demselben Kreisumfang liegen. Das Bogenmaß der Schraublöcher 16,17,18 entspricht einem Winkel α,β,γ von etwa 60° (siehe Figur 4). Die Schraublöcher 16,17,18 werden von den Schrauben 12 durchgriffen, die in korrespondierende Bohrungen des Halteelements 2 eingreifen.

Sind die Schrauben 12 festgezogen, liegt das Tragelement 4 fest an dem Halteelement 2 an. Für die Justage werden die Schrauben 12 gelöst, jedoch nicht vollständig entfernt. Dann kann das Tragelement 4 gegenüber dem Halteelement 3 gedreht werden, wobei die Schrauben 12 in den kreisbogenförmigen Schraublöchern 16,17,18 geführt werden. Wenn das von dem Magnetfeldsensor 5 abgegebene Signal dem vorgesehenen Wert, beispielsweise dem Maximalwert, entspricht, werden die Schrauben 12 wieder festgezogen. Dies geht schneller und genauer, als wenn beispielsweise mehrere unterschiedliche Anschraubpunkte vorgesehen sind.

Sollte der vorgesehen Wert des Sensorsignals nach einer Maximaldrehung von 60° noch nicht erreicht werden, wird das Tragelement 4 vollständig abgenommen und die Schrauben 12 in jeweils eine andere Bohrung des Halteelements 2 eingeführt. Auf diese Weise kann eine vollständige Periode des Magnetfelds nahezu kontinuierlich vermessen werden. Durch diese Ausgestaltung können auch produktionsbedingte Toleranzen der Bauteile kompensiert werden. Selbst ein erneutes vollständiges Lösen der Schrauben 12 und Versetzen des Tragelements 4 kann vermieden werden, wenn die Ausrichtung des Magneten 3 markiert wird und das Tragelement 4 entsprechend der Markierung aufgesetzt wird und die Feinjustierung durch ein sukzessives Drehen des Tragelements 4 wie eben beschrieben durchgeführt wird. Insbesondere die Nachjustierung bei der Wartung nach längerer Betriebsdauer kann einfacher, schneller und genauer durchgeführt werden.

Wie bereits erwähnt, zeigt Figur 3 eine erfindungsgemäße Sensoranordnung 15 an einer Kipp-Vorrichtung eines nicht näher dargestellten Abfallsammelfahrzeugs. Die Kipp-Vorrichtung ist an einem Rahmen 19 festgelegt. Die Welle 13 der Kipp-Vorrichtung ist drehbar in einem Rohr 14 gelagert, das die Welle 13 vor Verschmutzung schützt. Durch die Welle 13 wird ein Hebel 20 bewegt, der in Zusammenspiel mit anderen Komponenten dafür sorgt, dass eine Aufnahme für einen Abfallbehälter angehoben und insbesondere überkopf gekippt wird, so dass der Inhalt des Abfallbehälters in einen Sammelraum des Abfallsammelfahrzeugs geleert wird.

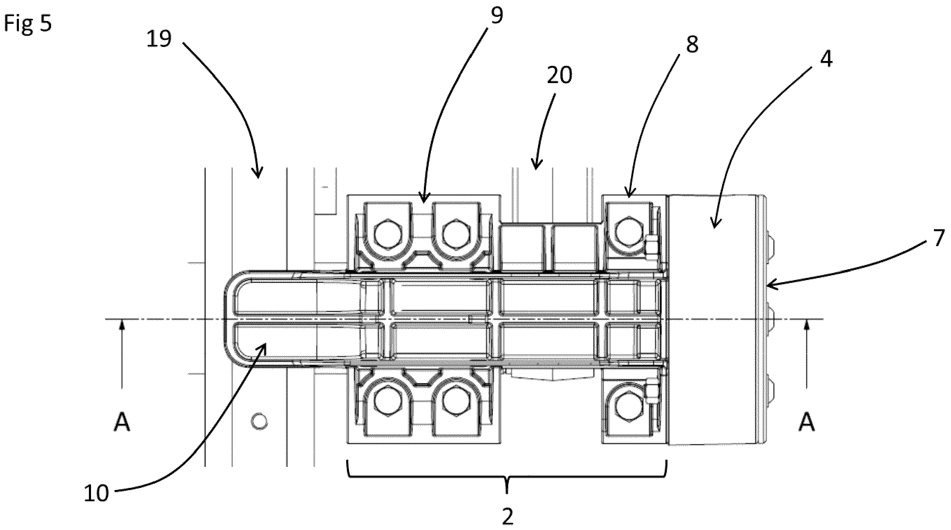

Wie in den Figuren 5 und 6 erkennbar ist, ist die Sensorhalterung 1 mit ihrem Anbindungsabschnitt 9 an dem Rohr 14 der Kipp-Vorrichtung festgelegt. Dabei umgreift der Anbindungsabschnitt 9 das Rohr 14. Der Anbindungsabschnitt 9 besteht aus einem ersten Teilsegment 21, das materialeinheitlich und einstückig mit dem Verbindungsabschnitt 10 verbunden ist, sowie einem zweiten Teilsegment 22, die zusammen einen Klemmring bilden. Die Teilsegmente 21,22 sind schraubtechnisch miteinander verbunden und an dem Rohr 14 festgelegt. Dadurch ist einerseits ein fester, unverschieblicher Sitz an dem Rohr 14 gewährleistet, gleichzeitig ist der Anbindungsabschnitt 9 sehr einfach zu montieren.

Der Aufnahmeabschnitt 8 besteht ebenfalls aus einem dritten Teilsegment 23 und einem vierten Teilsegment 24, wobei das dritte Teilsegment 23 materialeinheitlich und einstückig mit dem Verbindungsabschnitt 10 verbunden ist.

Dadurch sind der Anbindungsabschnitt 9 und der Aufnahmeabschnitt 8 starr zueinander festgelegt und der in dem Aufnahmeabschnitt 8 aufgenommene Magnet 3 fest in seiner relativen Position zu dem Rohr 14 und dem übrigen Rahmen 19. Der Verbindungsabschnitt 10 weist zur Verbesserung der Stabilität Verstärkungsstrukturen, beispielweise Stege, auf.

Das dritte und vierte Teilsegment 23,24 bilden zusammen den Innenraum 11 des Aufnahmeabschnitts 8, in dem der Magnet 3 angeordnet ist. Durch die mehrteilige Ausgestaltung der Aufnahmeabschnitts 8 lässt sich dieser ebenfalls sehr einfach montieren. Gleichzeitig können hier hinterschnittige Strukturen vorgesehen werden, die etwa Dichteelemente zum Abdichten des Innenraums 1 aufnehmen.

### Bezugszeichen

- 1: Sensorhalterung
- 2: Halteelement
- 3: Magnet
- 4: Tragelement
- 5: Magnetfeldsensor
- 6: Aufnahmeraum
- 7: Deckplatte
- 8: Aufnahmeabschnitt
- 9: Anbindungsabschnitt
- 10: Verbindungsabschnitt
- 11: Innenraum
- 12: Schraube
- 13: Welle
- 14: Rohr
- 15: Sensoranordnung
- 16: erstes Schraubloch
- 17: zweites Schraubloch
- 18: drittes Schraubloch
- 19: Rahmen
- 20: Hebel
- 21: erstes Teilsegment von 9
- 22: zweites Teilsegment von 9
- 23: drittes Teilsegment von 8
- 24: viertes Teilsegment von 8
- 25: Magnetträger
- α: Winkel
- β: Winkel
- γ: Winkel

## Patentansprüche

1. Sensorhalterung (1) mit einem Halteelement (2), das dazu eingerichtet ist, einen Magneten (3) zu umschließen, einem an dem Halteelement (2) angeordneten, mit diesem verbindbaren Tragelement (4), das dazu eingerichtet ist, einen zu dem Magneten (3) gegenüberliegend, beabstandet angeordneten Magnetfeldsensor (5) aufzunehmen, wobei das Tragelement (4) reversibel und rotatorisch variabel an dem Halteelement (2) befestigbar ist, **dadurch gekennzeichnet, dass** das Tragelement (4) kreisbogenförmige Schraublöcher (16,17,18) aufweist, die zum Befestigen des Tragelements (4) an dem Halteelement (2) von Schrauben (12) durchgriffen sind, so dass es möglich ist die rotatorische Position des Tragelements gegenüber dem Halteelement zu verändern, ohne dass die Schrauben vollständig gelöst werden müssen.

2. Sensorhalterung (1) nach Anspruch 1 **dadurch gekennzeichnet, dass** die Schraublöcher (16,17,18) ein Bogenmaß entsprechend einem Winkel α,β,γ von 30° bis 80°, bevorzugt 50° bis 70°, besonders bevorzugt 55° bis 65°, aufweisen.

3. Sensorhalterung (1) nach Anspruch 1 oder 2 **dadurch gekennzeichnet, dass** das Halteelement (2) einen Aufnahmeabschnitt (8) aufweist, der den Magneten (3) umschließt.

4. Sensorhalterung (1) nach Anspruch 3 **dadurch gekennzeichnet, dass** der Aufnahmeabschnitt (8) aus zumindest zwei miteinander verbindbaren, den Magneten (3) umschließenden Teilsegmenten (23, 24) gebildet ist.

5. Sensorhalterung (1) nach zumindest einem der vorstehenden Ansprüche
**dadurch gekennzeichnet, dass** das Halteelement (2) einen Anbindungsabschnitt (9) zum Befestigen der Sensorhalterung (1) aufweist.

6. Sensorhalterung (1) nach Anspruch 5 **dadurch gekennzeichnet, dass** der Anbindungsabschnitt (9) aus zumindest zwei miteinander verbindbaren, einen Klemmring bildenden Teilsegmenten (21, 22) gebildet ist.

7. Sensorhalterung (1) nach Anspruch 5 oder 6 **dadurch gekennzeichnet, dass** der Anbindungsabschnitt (9) und der Aufnahmeabschnitt (8) durch einen Verbindungabschnitt (10) miteinander verbunden sind, vorzugsweise einstückig und materialeinheitlich verbunden sind.

8. Sensorhalterung (1) nach Anspruch 7 **dadurch gekennzeichnet, dass** ein Teilsegment (21) des Anbindungsabschnitts (9) und ein Teilsegment (23) des Aufnahmeabschnitts (8) mit dem Verbindungsabschnitt (10) verbunden sind, vorzugsweise einstückig und materialeinheitlich verbunden sind.

9. Sensorhalterung (1) nach zumindest einem der Ansprüche 5 bis 8 **dadurch gekennzeichnet, dass** der Anbindungsabschnitt (9) und der Aufnahmeabschnitt (8) beabstandet zueinander angeordnet sind.

10. Sensoranordnung (15) mit einer Sensorhalterung (1) nach zumindest einem der vorstehenden Ansprüche sowie einem in dem Halteelement (2) angeordneten Magneten (3) und einem in dem Tragelement (4) angeordneten Magnetfeldsensor (5).

11. Sensoranordnung (15) nach Anspruch 10 **dadurch gekennzeichnet, dass** der Magnet (3) an einer in das Halteelement (2) hineinragenden oder diese durchgreifenden Welle (13) angeordnet ist.

12. Sensoranordnung (15) nach Anspruch 10 oder 11 **dadurch gekennzeichnet, dass** die Welle (13) zumindest abschnittsweise in einem Rohr (14) angeordnet ist und der Anbindungsabschnitt (9) der Sensorhalterung (1) an dem Rohr (14) angeordnet ist.

13. Sensoranordnung (15) nach zumindest einem der Ansprüche 10 bis 12 **dadurch gekennzeichnet, dass** der Anbindungsabschnitt (9) das Rohr (14) umgreift.

14. Abfallsammelfahrzeug mit einer Sensoranordnung (15) nach zumindest einem der Ansprüche 10 bis 13.

## Claims

1. Sensor holder (1) comprising a retaining element (2) which is designed to enclose a magnet (3), the sensor holder having a support element (4) which is arranged on the retaining element (2) and can be connected to it and is designed to receive a magnetic field sensor (5) which is arranged opposite and spaced apart from the magnet (3), it being possible for the support element (4) to be reversibly and rotatably variably fastened to the retaining element (2), **characterized in that** the support element (4) has arc-shaped screw holes (16, 17, 18) which are penetrated by screws (12) for fastening the support element (4) to the retaining element (2) so that it is possible to change the rotational position of the support element relative to the retaining element without having to completely loosen the screws.

2. Sensor holder (1) according to claim 1, **characterized in that** the screw holes (16, 17, 18) have an arc dimension corresponding to an angle α, β, γ of 30° to 80°, preferably 50° to 70°, particularly preferably 55° to 65°.

3. Sensor holder (1) according to claim 1 or 2, **characterized in that** the retaining element (2) has a receiving portion (8) which encloses the magnet (3).

4. Sensor holder (1) according to claim 3, **characterized in that** the receiving portion (8) is formed by at least two interconnectable sub-segments (23, 24) which enclose the magnet (3).

5. Sensor holder (1) according to at least one of the preceding claims,
**characterized in that** the retaining element (2) has a joining portion (9) for fastening the sensor holder (1).

6. Sensor holder (1) according to claim 5, **characterized in that** the joining portion (9) is formed by at least two interconnectable sub-segments (21, 22) which form a clamping ring.

7. Sensor holder (1) according to claim 5 or 6, **characterized in that** the joining portion (9) and the receiving portion (8) are interconnected by a connecting portion (10), preferably are connected integrally and on a materially uniform basis.

8. Sensor holder (1) according to claim 7, **characterized in that** a sub-segment (21) of the joining portion (9) and a sub-segment (23) of the receiving portion (8) are connected to the connecting portion (10), preferably are connected integrally and on a materially uniform basis.

9. Sensor holder (1) according to at least one of claims 5 to 8, **characterized in that** the joining portion (9) and the receiving portion (8) are arranged spaced apart from one another.

10. Sensor arrangement (15) comprising a sensor holder (1) according to at least one of the preceding claims, a magnet (3) which is arranged in the holding element (2), and a magnetic field sensor (5) which is arranged in the support element (4).

11. Sensor arrangement (15) according to claim 10, **characterized in that** the magnet (3) is arranged on a shaft (13) that projects into or penetrates the retaining element (2).

12. Sensor arrangement (15) according to claim 10 or 11, **characterized in that** the shaft (13) is arranged in part in a tube (14), and the joining portion (9) of the sensor holder (1) is arranged on the tube (14).

13. Sensor arrangement (15) according to at least one of claims 10 to 12, **characterized in that** the joining portion (9) encompasses the tube (14).

14. Waste collection vehicle comprising a sensor arrangement (15) according to at least one of claims 10 to 13.

## Revendications

1. Support de capteur (1) comportant un élément de retenue (2) conçu pour entourer un aimant (3), un élément porteur (4) agencé sur l'élément de retenue (2) et pouvant être relié à celui-ci, lequel élément porteur est conçu pour recevoir un capteur de champ magnétique (5) agencé à distance et en face de l'aimant (3), dans lequel l'élément porteur (4) peut être fixé de manière réversible et en rotation variable à l'élément de retenue (2), **caractérisé en ce que** l'élément porteur (4) présente des trous de vis (16, 17, 18) en forme d'arc de cercle traversés par des vis (12) pour la fixation de l'élément porteur (4) à l'élément de retenue (2), en sorte qu'il est possible de modifier la position en rotation de l'élément porteur par rapport à l'élément de retenue sans devoir desserrer complètement les vis.

2. Support de capteur (1) selon la revendication 1, **caractérisé en ce que** les trous de vis (16, 17, 18) présentent une mesure en radian correspondant à un angle α, β, γ allant de 30° à 80°, de préférence de 50° à 70°, et de manière particulièrement préférée de 55° à 65°.

3. Support de capteur (1) selon la revendication 1 ou 2, **caractérisé en ce que** l'élément de retenue (2) présente une section de logement (8) qui entoure l'aimant (3).

4. Support de capteur (1) selon la revendication 3, **caractérisé en ce que** la section de logement (8) est formée d'au moins deux sous-segments (23, 24) pouvant être reliés entre eux et entourant l'aimant (3).

5. Support de capteur (1) selon au moins l'une des revendications précédentes, **caractérisé en ce que** l'élément de retenue (2) présente une section de raccordement (9) pour la fixation du support de capteur (1).

6. Support de capteur (1) selon la revendication 5, **caractérisé en ce que** la section de raccordement (9) est formée d'au moins deux sous-segments (21, 22) pouvant être reliés entre eux et formant une bague de serrage.

7. Support de capteur (1) selon la revendication 5 ou 6, **caractérisé en ce que** la section de raccordement (9) et la section de logement (8) sont reliées entre elles par une section de liaison (10), de préférence sont reliées d'un seul tenant et en un matériau homogène.

8. Support de capteur (1) selon la revendication 7, **caractérisé en ce qu'**un sous-segment (21) de la section de raccordement (9) et un sous-segment (23) de la section de logement (8) sont reliés à la section de liaison (10), de préférence sont reliées d'un seul tenant et en un matériau homogène.

9. Support de capteur (1) selon au moins l'une des revendications 5 à 8, **caractérisé en ce que** la section de raccordement (9) et la section de logement (8) sont agencées espacées l'une de l'autre.

10. Agencement de capteur (15) comportant un support de capteur (1) selon au moins l'une des revendications précédentes, ainsi qu'un aimant (3) agencé dans l'élément de retenue (2) et un capteur de champ magnétique (5) agencé dans l'élément porteur (4).

11. Agencement de capteur (15) selon la revendication 10, **caractérisé en ce que** l'aimant (3) est agencé sur un arbre (13) traversant l'élément de retenue (2) ou faisant saillie dans celui-ci.

12. Agencement de capteur (15) selon la revendication 10 ou 11, **caractérisé en ce que** l'arbre (13) est agencé, au moins dans certaines sections, dans un tube (14) et la section de raccordement (9) du support de capteur (1) est agencée sur le tube (14).

13. Agencement de capteur (15) selon au moins l'une des revendications 10 à 12, **caractérisé en ce que** la section de raccordement (9) entoure le tube (14).

14. Véhicule de collecte des déchets comportant un agencement de capteur (15) selon au moins l'une des revendications 10 à 13.
